# EUROPEAN PATENT APPLICATION

(11) **EP 4 489 256 A2**
(43) Date of publication of application: **08.01.2025**
(21) Application number: 24181185.0
(22) Date of filing: 10.06.2024
(51) Int. Cl.: H02J 7/00, H02J 7/34

(54) **ENERGY STORAGE MODULE FOR HIGH-POWER APPLICATIONS**

(30) Priority: 02.07.2023 DE 102023117426
(71) Applicant: Skeleton Technologies GmbH, 01900 Grossröhrsdorf (DE)
(72) Inventor: Pattarachai, Srimuk, 01900 Großröhrsdorf (DE)
(74) Representative: KASTEL Patentanwälte PartG mbB

(57) **Abstract**

In order to improve energy storage modules (10) for high-power applications, the invention proposes an energy storage module (10), comprising an electrical output (51); a plurality of ultracapacitor storage cells (21, 22), wherein at least one ultracapacitor storage cell is configured as a first type storage cell (21) and at least one ultracapacitor storage cell is configured as a second type storage cell (22), wherein the first type storage cell (21) includes microporous carbon as active material on both electrodes and the second type storage cell (22) is configured as a hybrid cell and includes microporous carbon and a metal oxide on at least one electrode as active material; and a plurality of switches (41, 42) that are electrically connected to the ultracapacitor storage cells (21, 22) to selectively connect the first type energy storage cell (21) or the second type energy storage cell (22) or both to an electrical output (51).

## Description

The invention relates to an energy storage module that is suitable for high-power applications.

The terms used herein for macropores, mesopores and micropores are based on the classification adopted by the International Union of Pure and Applied Chemistry (IUPAC), according to which macropores have a pore diameter greater than 50 Nanometer (nm), mesopores have a pore diameter between 2 nm and 50 nm, and micropores have a pore diameter of less than 2 nm. Furthermore, as used herein, the terms microporous, mesoporous or microporous indicated that the corresponding type of pores is present. It does not exclude the presence of other types of pores, e.g. a microporous material is not limited to having only micropores, but may also include meso- and/or macropores.

Specific surface area, i.e., surface area per unit weight, refers to values obtained by nitrogen physisorption in conjunction with the Brunauer-Emmet-Teller (BET) and Rouquerol evaluation methods, as described in the IUPAC Technical Report: "Physisorption of gases, with special reference to the evaluation of surface area and pore size distribution (IUPAC Technical Report)" by Thommes et al., Pure Appl. Chem. 2015; 87(9-10): 1051-1069. This disclosure is incorporated herein by reference. For the sake of brevity the specific surface area so determined is also referred to as BET nitrogen surface area.

With the increasing need for electrification across major industries, there is also an increased demand for solutions that enable the use of high-power energy storage, i.e., high electrical currents in very short timeframes.

Ultracapacitors, sometimes also referred to as supercapacitors, can provide high current pulses within milliseconds. Typically, energy storage modules comprising ultracapacitors can also be charged or discharged within a few seconds up to a few minutes.

DE 10 2022 100 864 A1, DE 10 2022 100 865 A1, DE 10 2022 100 866 A1, DE 10 2022 100 867 A1 disclose energy storage cells with fast charge and discharge capabilities.

KR 10 1 599 962 B1 discloses an energy storage system.

US 10 290 912 B2 discloses a battery system.

It is the object of the invention to improve energy storage modules, preferably regarding their energy content, peak current output, or cell lifetime.

The object is achieved by the subject-matter of the independent claims. Preferred embodiments are subject-matter of the dependent claims.

The invention proposes an energy storage module, comprising:
- an electrical output;
- a plurality of ultracapacitor storage cells, wherein at least one ultracapacitor storage cell is configured as a first type storage cell and at least one ultracapacitor storage cell is configured as a second type storage cell, wherein the first type storage cell includes microporous carbon as active material on both electrodes and the second type storage cell is configured as a hybrid cell and includes microporous carbon and a metal oxide on at least one electrode as active material; and
- a plurality of switches that are electrically connected to the ultracapacitor storage cells to selectively connect the first type energy storage cell or the second type energy storage cell or both to an electrical output.

Preferably, a first operation voltage of the first type energy storage cell has a smaller lower limit than a second operation voltage of the second type energy storage cell.

Preferably, the first operation voltage is from 0 V to 5 V, preferably from 0 V to 3 V, and the second operation voltage is from 1 V to 5 V, preferably from 1 V to 3 V.

Preferably, the metal oxide is chosen from a group consisting of niobium pentoxide (Nb₂O₅), lithium manganese oxide (LiMn₂O₄), a lithium nickel manganese cobalt oxide (LiNiₓMn_{y}Co_{1-x-y}O₂), lithium cobalt oxide (LiCoO₂), and a lithium nickel cobalt aluminium oxide (LiNiₓCo_{y}Al_{z}O₂).

Preferably, the energy storage module exclusively has first type and second type energy storage cells for energy storage.

Preferably, the energy storage module further comprises a battery management system for controlling the charge and discharge process of the ultracapacitor storage cells.

Preferably, the battery management system is supplied with electricity by the ultracapacitor storage cells.

Preferably, the battery management system comprises at least one sensor configured for measuring temperature, electrical current, or electrical impedance.

Preferably, the battery management system is configured to discharge one or both types of energy storage cells to a predetermined voltage set point, upon receiving a temperature discharge command.

Preferably, the battery management system is configured to generate the temperature discharge command, if a predetermined temperature threshold is exceeded.

Preferably, the energy storage module further comprises a temperature regulation means configured for maintaining a predetermined temperature of the ultracapacitor storage cells.

Preferably, the temperature regulation means comprises active cooling means that are preferably controlled by the battery management system.

Preferably, the energy storage module further comprises a communication connection for receiving commands to control the energy storage module in accordance with the commands.

Preferably, the energy storage module according to any of the preceding claims, further comprising a DC/DC converter that is configured to charge one type energy storage cell while discharging the other type energy storage cell.

Preferably, the DC/DC converter is configured to charge one type energy storage cell (21, 22) with electrical energy from the other type energy storage cell.

In some embodiments the energy storage module comprises a housing. In some embodiments the energy storage module does not comprise a housing.

The microporous carbon in both types of ultracapacitors may be a carbide-derived carbon.

The microporous carbon preferably exhibits a specific surface area of at least 500 m²/g, preferably more than 1000 m²/g, more preferably more than 1500 m²/g in BET nitrogen surface area.

The electrodes of both types of cells may comprise additional components such as binders or conductive additives as well as unavoidable impurities.

In some embodiments the first electrode of the second type of cells comprises niobium oxide as metal oxide component, preferably niobium pentoxide.

In some embodiments the second type of cells comprises an organic electrolyte comprising 50 vol% to 95 vol% acetonitrile and 5 vol% to 50 vol% ethylenecarbonate and added to that at least one lithium conductive salt.

In some embodiments the lithium conductive salt is lithium hexafluorophosphate (LiPF₆), less preferred lithium perchlorate (LiClO₄), lithium tetrafluoroborate (LiBF₄), lithium hexafluoroarsenate (LiAsF₆), lithium trifluoromethanesulfonate (LiSOsCFs), lithium bis(trifluoromethylsulfonyl)imide (LiN(SO₂CF₃)₂), lithium bis(pentafluoroethanesulfonyl)imide (LiN(SO₂C₂F₅)₂) and mixtures thereof.

In some embodiments at least one or multiple ultracapacitors of the module can be charged or discharged individually. In some embodiments a plurality of the ultracapacitors of one or both types are configured in a way to be charged in combination.

Furthermore, the electrical connection between the two types of ultracapacitors may comprise additional components, such as switches.

Both types of ultracapacitors are preferably electrically connected to at least two terminals which allow for the module being charged using an external power supply.

Both types of ultracapacitors are electrically connected to at least two terminals which allow for the module being coupled to an electric load.

In some embodiments the energy storage module comprises a management system for the control of the charge and discharge processes of the module.

In some embodiments the management system is provided with electrical energy by the first or second type of cells or by both types combined.

In some embodiments the management system is located externally to the module and uses a communication connection to control the module.

In some embodiments the management system is integrated into the module.

In some embodiments the module may comprise sensing units for measuring temperature, electrical current or electrical impedance, as well as other parameters.

In some embodiments the energy storage module comprises a means of temperature regulation, for example via active or passive cooling or active or passive heating.

In some embodiments the energy storage module may comprise one or multiple heat sinks.

In some embodiments both types of cells are electrically connected via a DC/DC converter configured to charge one type of cells, while discharging the other type of cells.

In some embodiments the energy storage module is configured to discharge one or both types of cells to a given voltage set point if a given temperature is exceeded as determined by any temperature sensor comprised in the module.

In some embodiments the first type energy storage cells comprise microporous carbon material on the negative electrode and microporous carbon material on the positive electrode.

In some embodiments the second type energy storage cells comprise a metal oxide and a microporous carbon material on the negative electrode and an alkaline metal, preferably lithium, as active material on the positive electrode.

In some embodiments the first type energy storage cells are electrically connected to each other and the second type energy storage cells are electrically connected to each other.

In some embodiments the metal oxide on the negative electrode of the second type energy storage cells is chosen from a group consisting of lithium titanium oxide, niobium oxide, niobium pentoxide, and a mixed oxide predominately consisting of niobium oxide.

In some embodiments the microporous carbon material on the negative electrode or on the positive electrode of the first type energy storage cells is a microporous material with a BET surface area of at least 500 m²/g.

In some embodiments the micro porous carbon material on the negative electrode of the second type of cells is a microporous material with a BET surface area of at least 500 m²/g.

In some embodiments the mass ratio of microporous carbon material and the metal oxide on the negative electrode of the second type energy storage cells ranges from 9:1 to 1:9, preferably from 6:4 to 4:6.

In some embodiments the active material on the positive electrode of the second type energy storage cells is chosen from a group consisting of an alkaline metal, e.g., lithium comprising manganese oxide or an alkaline metal comprising manganese oxide comprising niobium, a nickel manganese oxide or a nickel manganese cobalt oxide or a lithium cobalt oxide a nickel cobalt aluminum oxide.

In some embodiments the alkaline metal is lithium or sodium.

In some embodiments the energy storage module comprises a battery management system or an interface for the communication with an external battery management system.

In some embodiments the energy storage module comprises a system for adjusting the temperature.

In some embodiments the energy storage module comprises one or multiple DC/DC converters or one or multiple AC/DC converters or one or multiple inverters.

In some embodiments the DC/DC converters electrically connect the first type energy storage cells and the second type energy storage cells.

In some embodiments the AC/DC converters electrically connect to the first type energy storage cells and/or the second type energy storage cells for charging and/or discharging.

In some embodiments the inverters are electrically connected to the electrical output for supplying a load, and the inverters connectable to the first type energy storage cells and/or the second type energy storage cells.

In some embodiments the energy storage module comprises a charging path between the first type energy storage cells and the second type energy storage cells, wherein the charging path allows for a bidirectional charging to or from a source of electrical energy located externally to the energy storage module.

In some embodiments the energy storage module comprises a first switch for control of the power supply to the first type of cells and a second switch to the second type of cells, preferably controled by the battery management system.

In some embodiments the battery management system is configured to enable charging of the first type energy storage cells only if the power provided to the energy storage module is within a predetermined range.

In some embodiments the battery management system is configured to enable charging the second type energy storage cells only if the power provided to the module is within a predetermined range.

In some embodiments the energy storage module is configured such that the first type energy storage cells are able to charge or discharge the second type energy storage cells and vice versa.

In some embodiments the energy storage module is configured such that either one or both types energy storage cells are able also supply charge to external units that are external to the module.

Ultracapacitors are considered suitable for the respective high-power application profiles. The underlying energy storage mechanism is based on the formation of an electrochemical double-layer (ECDL) on the surface of the active material. The formation and dissolution of the ECDL is a fast process compared to faradaic reactions, which allows a higher charging/discharging current. The active material is typically a high-surface area (micro-)porous carbon material. The energy storage mainly takes place at the surface of the active material and not within its bulk. As a result, ultracapacitors typically exhibit a smaller specific energy and smaller energy density compared with other types of storage, but allow a larger charge or discharge current.

In some approaches, the goal is to try and increase the energy content to be stored in high-power energy storage cells and may involve the use of electrode active materials, such as metal oxides, which add a faradaic component to the electrochemical storage mechanism. Here, also the bulk of the respective material may add to the available capacity at the expense of the charge- or discharge speed.

Energy storage cells which comprise at least two different active materials which allow to exploit different electrochemical energy storage mechanisms, e.g. the formation of an electrochemical double-layer on the surface of one type of active material and faradaic reactions at another type of active material, are referred to as hybrid cells or hybrid batteries.

Typically, ultracapacitors can be completely discharged to a cell voltage of 0 V, whereas depending on the specific cell design and choice of cell components, such as active materials, electrolyte composition etc., "hybrid cells" or "hybrid batteries" may not be discharged to a cell voltage of 0 V as this could to an irreversible loss of capacity, for example by electrolyte decomposition.

The energy storage cells, depending on the type, differ in general regarding maximum capacitance, equivalent series resistance, voltage-current relation upon charging or discharging.

Depending on how the module is operated, e.g., if there is a sudden power peak required, one type of energy storage cell is able to provide the necessary peak power, while the other type of energy storage cell is able to provide additionally stored electrical energy at a later stage, when the peak has subsided.

An idea is to use a combination of ultracapacitors with hybrid cells as an energy storage. Applicant found that the combination of these two types of energy storage not only allows for improved high-power charge-discharge characteristics of the energy storage module but also unexpectedly improves the lifetime of the individual ultracapacitors.

Embodiments of the invention are described in more detail with reference to the accompanying schematic drawings that are listed below.
- Fig. 1: depicts a first embodiment of an energy storage module;
- Fig. 2: depicts a second embodiment of an energy storage module;
- Fig. 3: depicts a third embodiment of an energy storage module; and
- Fig. 4: depicts a fourth embodiment of an energy storage module.

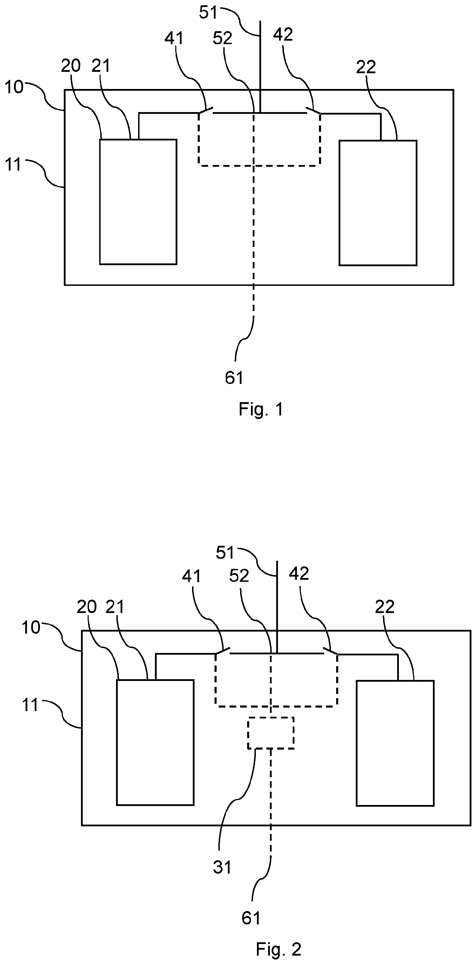

Referring to Fig. 1, an energy storage module 10 is depicted. The energy storage module 10 comprises housing 11. The housing 11 is optional and can be removed as the case may be in certain applications.

The energy storage module 10 further comprises an energy storage assembly 20. The energy storage assembly 20 is preferably accommodated within the housing 11. The energy storage assembly 20 is configured for storing electrical energy using a plurality of ultracapacitor storage cells.

The ultracapacitor storage cells include a first type storage cell 21 and a second type storage cell 22. The ultracapacitor storage cells 21, 22 may be connected in series, in parallel, or in groups. Within a group, the respective ultracapacitor cells 21, 22 are preferably connected in series where in turn the groups among them are connected in parallel, or vice versa.

In the energy storage module 10, the first type storage cell 21 and the second type storage cell 22 are separated in the sense that a specific group of storage cells 21, 22 contains only the same type of storage cells 21, 22 and, if applicable, only groups of the same type of storage cells 21, 22 are electrically connected to each other.

The design of the grouping of the ultracapacitor storage cells 21, 22 is dependent on the specific application and is known in the field.

The energy storage module 10 comprises a first switch 41 that is electrically connected to the first type storage cell 21. The first switch 41 is preferably connected only to the first type storage cells 21 and an electrical output 51.

Furthermore, the energy storage module 10 comprises a second switch 42 that is electrically connected to the second type storage cell 22. The second switch 42 is preferably connected only to the second type storage cells 22 and the electrical output 51.

The energy storage module 10 further comprises the electrical output 51. The electrical output 51 typically consists of a positive terminal and negative terminal. The electrical output 51 can be selectively connected to the first type storage cell 21 and the second type storage cell 22 via the first and second switches 41, 42. The first and second switches 41, 42 are preferably arranged such that the first type storage cells 21 or the second type storage cells 22 can get electrically connected to the electrical output 51. It is also possible for the first and second switches 41, 42 to be controlled to transfer charge between the first type storage cells 21 and the second type storage cells 22.

The energy storage module 10 further comprises a communication connection 61 for receiving commands from an external system, such as an external management system that controls the switches 41, 42 and may control other elements of the energy storage module 10.

The energy storage module 10 may further include a current sensor 52. The current sensor 52 is preferably arranged to measure the output current that flows to the electrical output 51. The output current sensor 52 may also be connected to the communication connection 61 to give output current data to the external management system.

The first type storage cell 21 includes microporous carbon as active material on both electrodes. Furthermore, the first type storage cell 21 includes a suitable electrolyte with a suitable conductive lithium salt. The first type storage cell 21 stores electrical energy using only an electrochemical double-layer. The configuration of the first type storage cell 21 allows a discharge down to 0 V, nearly no permanent degradation or damage to the cell.

The second type storage cell 22 is configured as a hybrid cell. The second type storage cell 22 includes microporous carbon and a metal oxide on at least one electrode as active material. The second type storage cell 22 stores electrical energy using an electrochemical double-layer and a faradaic reaction, e.g., by depositing lithium in the micropores of the microporous carbon. The configuration of the second type storage cell 22 causes a lower limit of the operational voltage of the cell below which permanent degradation or damage is much more likely than above. Typically, the lower limit of the operational voltage is about 1 V.

The energy storage module 10 operates as follows. A load (not shown) is connected via the electrical output 51 to the energy storage module 10. Initially, the first switch 41 is open and the second switch 42 is closed, thereby connecting the load to the second type storage cells 22.

Upon the load requiring more power, the output current increases, and the output current sensor 52 detects the increase in output current. The output current data is transmitted via the communication connection 61 to the external management system.

Upon determination that the output current exceeds a predetermined threshold, the external management system sends a switch command that closes the first switch 41 such that the first type storage cells 21 are electrically connected to the load in addition to the second type storage cells 22.

Due to the first type storage cell 21 having the electrical energy stored in the electrochemical double layer, the amount of current on a short timeframe can be easily provided without damaging the first type storage cells 21.

In a variant, the first switch 41 is closed and the second switch 42 is opened such that, without interruption of the current, the load is supplied by the energy storage module 10.

If it is determined that the peak current is over, the second switch 42, if applicable, is closed to (re-)connect the second type storage cell 22 to the load and the first switch 41 is opened to electrically decouple the first type storage cell 21 from the load and/or the second type storage cell 22. While the second type storage cell 22 is not necessarily able to provide the peak currents, the second type storage cell 22 includes a larger energy content which allows to maintain operation of the load for a longer period of time.

Referring to Fig. 2, a second embodiment of an energy storage module 10 is only described insofar as it differs from the first embodiment. The energy storage module 10 according the second embodiment includes a management system 31, that is sometimes called a battery management system (BMS) even if the energy storage cells are ultracapacitors and not batteries. The management system 31 is integrated in the energy storage module 10, e.g., arranged within the housing 11 and controls the first switch 41 and the second switch 42, and receives the detections of the output current sensor 52. Thus, in contrast to the first embodiment, the management system 31 is integrated in the energy storage module 10. Otherwise, the energy storage module 10 functions the same.

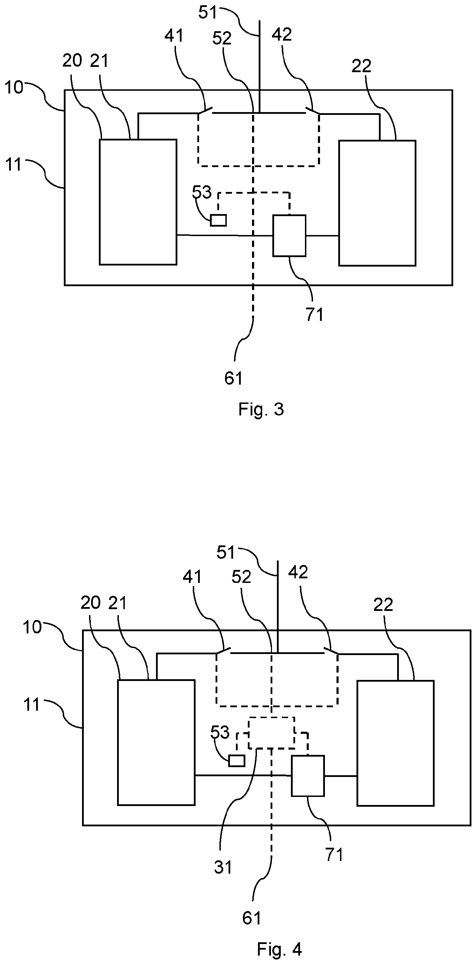

Referring to Fig. 3, a third embodiment of the energy storage module 10 is described insofar as it differs from the first embodiment. The energy storage module 10 further includes a DC/DC converter 71. The DC/DC converter 71 can electrically connect the first type storage cells 21 with the second type storage cells 22. The electrical connection can be formed on a cell level, i.e. from individual cell to individual cell, or a group level, i.e. from a group of cells to another group of cells. The DC/DC converter 71 is preferably the only means that allows an electrical connection between the first energy storage cells 21 and the second energy storage cells 22. In other words, if the DC/DC converter 71 is present then the first switch 41 and the second switch 42 are preferably controlled such that the there is no electrical connection via the first and second switches 41, 42 between the first type energy storage cells 21 and the second type energy storage cells 22 that is longer than necessary for an interruption less power output of the energy storage module 10.

The energy storage module 10 comprises a temperature sensor 53 that is arranged in the vicinity of the ultracapacitor storage cells 21, 22 and, if applicable, within the housing 11. The temperature sensor 53 is connected to the external management system via the communication connection 61. In some variants, each cell or group of cells may have its own temperature sensor.

Regarding the supply of electrical energy to the load, the energy storage module 10 functions the same as the previously described embodiments.

In addition, if the temperature sensor 53 determines that the temperature of the energy storage assembly 20, specifically of the ultracapacitor storage cells 21, 22 exceeds a predetermined threshold, then the management system may initiate a discharge or balancing of the different ultracapacitor storage cells 21, 22via the DC/DC converter 71. The ultracapacitor storage cells 21, 22 may be discharged down to a preset voltage point. That voltage point is preferably chosen such that the ultracapacitor storage cells 21, 22 do not incur permanent damage.

Referring to Fig. 4, a fourth embodiment of an energy storage module 10 is described in more detail. The energy storage module 10 includes the battery management system 31 that is integrated to also control the temperature sensor 53 and the DC/DC converter 71.

In order to improve energy storage modules (10) for high-power applications, the invention proposes an energy storage module (10), comprising an electrical output (51); a plurality of ultracapacitor storage cells (21, 22), wherein at least one ultracapacitor storage cell is configured as a first type storage cell (21) and at least one ultracapacitor storage cell is configured as a second type storage cell (22), wherein the first type storage cell (21) includes microporous carbon as active material on both electrodes and the second type storage cell (22) is configured as a hybrid cell and includes microporous carbon and a metal oxide on at least one electrode as active material; and a plurality of switches (41, 42) that are electrically connected to the ultracapacitor storage cells (21, 22) to selectively connect the first type energy storage cell (21) or the second type energy storage cell (22) or both to an electrical output (51).

### List of reference signs:

- 10: energy storage module
- 11: housing

- 20: energy storage assembly
- 21: first type energy storage cell
- 22: second type energy storage cell

- 31: battery management system (BMS)

- 41: first switch
- 42: second switch

- 51: electrical output
- 52: current sensor
- 53: temperature sensor

- 61: communication connection

- 71: DC/DC converter

## Claims

1. An energy storage module (10), comprising:
- an electrical output (51);
- a plurality of ultracapacitor storage cells (21, 22), wherein at least one ultracapacitor storage cell is configured as a first type storage cell (21) and at least one ultracapacitor storage cell is configured as a second type storage cell (22), wherein the first type storage cell (21) includes microporous carbon as active material on both electrodes and the second type storage cell (22) is configured as a hybrid cell and includes microporous carbon and a metal oxide on at least one electrode as active material; and
- a plurality of switches (41, 42) that are electrically connected to the ultracapacitor storage cells (21, 22) to selectively connect the first type energy storage cell (21) or the second type energy storage cell (22) or both to an electrical output (51).

2. The energy storage module (10) according to claim 1, wherein a first operation voltage of the first type energy storage cell (21) has a smaller lower limit than a second operation voltage of the second type energy storage cell (22).

3. The energy storage module (10) according to claim 2, wherein the first operation voltage is from 0 V to 5 V, preferably from 0 V to 3 V, and the second operation voltage is from 1 V to 5 V, preferably from 1 V to 3 V.

4. The energy storage module (10) according to any of the preceding claims, wherein the metal oxide is chosen from a group consisting of niobium pentoxide (Nb₂O₅), lithium manganese oxide (LiMn₂O₄), a lithium nickel manganese cobalt oxide (LiNiₓMn_{y}Co_{1-x-y}O₂), lithium cobalt oxide (LiCoO₂), and a lithium nickel cobalt aluminium oxide (LiNiₓCo_{y}Al_{z}O₂).

5. The energy storage module (10) according to any of the preceding claims, exclusively having first type and second type energy storage cells (21, 22) for energy storage.

6. The energy storage module (10) according to any of the preceding claims, further comprising a battery management system (31) for controlling the charge and discharge process of the ultracapacitor storage cells (21, 22).

7. The energy storage module (10) according to claim 6, wherein the battery management system (31) is supplied with electricity by the ultracapacitor storage cells (21, 22).

8. The energy storage module (10) according to claim 6 or 7, wherein the battery management system (31) comprises at least one sensor configured for measuring temperature (53), electrical current (52), or electrical impedance.

9. The energy storage module (10) according to any of the claims 6 to 8, wherein the battery management system (31) is configured to discharge one or both types of energy storage cells (21, 22) to a predetermined voltage set point, upon receiving a temperature discharge command.

10. The energy storage module (10) according to claim 9, wherein the battery management system (31) is configured to generate the temperature discharge command, if a predetermined temperature threshold is exceeded.

11. The energy storage module (10) according to any of the preceding claims, further comprising a temperature regulation means configured for maintaining a predetermined temperature of the ultracapacitor storage cells (21, 22).

12. The energy storage module (10) according to claim 11, wherein the temperature regulation means comprises active cooling means that are preferably controlled by the battery management system (31).

13. The energy storage module (10) according to any of the preceding claims, further comprising a communication connection (61) for receiving commands to control the energy storage module (10) in accordance with the commands.

14. The energy storage module (10) according to any of the preceding claims, further comprising a DC/DC converter (71) that is configured to charge one type energy storage cell (21, 22) while discharging the other type energy storage cell (22, 21).

15. The energy storage module (10) according to claim 14, wherein the DC/DC converter (71) is configured to charge one type energy storage cell (21, 22) with electrical energy from the other type energy storage cell (22, 21).
